(19) Europäisches Patentamt / European Patent Office / Office européen des brevets

(11) **EP 2 589 044 B1**

(12) **FASCICULE DE BREVET EUROPEEN**

(45) Date de publication et mention
de la délivrance du brevet:
**02.01.2019 Bulletin 2019/01**

(21) Numéro de dépôt: **11737985.9**

(22) Date de dépôt: **17.06.2011**

(51) Int Cl.:
**G10L 25/00** *(2013.01)*   **G10L 15/14** *(2006.01)*
**G10L 25/27** *(2013.01)*

(86) Numéro de dépôt international:
**PCT/FR2011/051395**

(87) Numéro de publication internationale:
**WO 2012/001261 (05.01.2012 Gazette 2012/01)**

(54) **PROCEDE ET DISPOSITIF DE DETECTION DE CHOCS ACOUSTIQUES**

VERFAHREN UND VORRICHTUNG ZUR ERKENNUNG VON KNALLGERÄUSCHEN

METHOD AND DEVICE FOR DETECTING ACOUSTIC SHOCKS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **29.06.2010 FR 1055256**

(43) Date de publication de la demande:
**08.05.2013 Bulletin 2013/19**

(73) Titulaire: **Orange**
**75015 Paris (FR)**

(72) Inventeurs:
• **FAURE, Julien**
**22300 Ploubezre (FR)**
• **GUERIN, Alexandre**
**35200 Rennes (FR)**
• **MARRO, Claude**
**22220 Plouguiel (FR)**

(74) Mandataire: **Regimbeau**
**20, rue de Chazelles**
**75847 Paris Cedex 17 (FR)**

(56) Documents cités:
**EP-A2- 1 471 767**

## Description

La présente invention se rapporte à un procédé et à un dispositif de détection de chocs acoustiques.

De manière générale, la présente invention concerne les domaines des technologies audio et des technologies liées à la parole.

Les chocs acoustiques sont des sons de type sifflements composés d'une à plusieurs composantes fréquentielles qui peuvent apparaître lors de la reproduction d'un flux audio multimédia (parole, musique, son), et dont le niveau moyen peut être inférieur au niveau moyen du signal audionumérique utile et peut aller jusqu'à la saturation du signal audionumérique. Même à des niveaux très faibles, les chocs acoustiques ont un impact non négligeable sur la santé (effets psychophysiologiques), notamment lorsque ces derniers interviennent sur des services de téléphonie, et plus particulièrement en centre d'appels.

La détection de chocs acoustiques est aisée pendant des périodes de silence mais devient difficile lorsque le choc est à faible niveau et est ajouté à de la parole ou de la musique.

Les techniques de protection connues se basent, soit sur des approches temporelles (enveloppe) et sur la détection de signaux de trop forte énergie, soit sur une analyse plus fine de type temps-fréquence. Dans le premier cas, il est impossible de discriminer un signal de parole d'un choc, et même de détecter un choc de faible énergie, surtout lorsque celui-ci est mixé dans un autre signal (de la parole par exemple). Dans le second cas, la détection se base sur un calcul de paramètres physiques et sur des valeurs de seuils associées à ces paramètres physiques. Les techniques antérieures restent peu robustes, notamment à la problématique de détection d'un choc mixé. Il en résulte soit de nombreuses fausses alarmes (détection de choc en présence de parole seule), et une forte dégradation de la dite parole, soit des non-détections, ce qui n'assure plus la protection de l'utilisateur.

L'art antérieur connaît, par la demande de brevet américain N° US 2005/0105717, un système d'interface téléphonique. Cette demande de brevet américain de l'art antérieur décrit un système pour la protection contre les chocs acoustiques. Ce système est composé de plusieurs étages. On trouve notamment des limiteurs, des compresseurs, des réducteurs de bruit et un module qui détecte et supprime les chocs de type sons purs. Ce système permet, au moyen d'une analyse temps/fréquence, une détection des chocs acoustiques. Néanmoins, son action est limitée à une seule fréquence par bande entre [0-2300] et [2300-4000] Hz. De plus, l'algorithme de détection du pic reste dépendant du volume. Enfin, afin de pouvoir détecter l'ensemble des chocs, le critère de détection tel que proposé dans cette demande de brevet américain de l'art antérieur entraîne de nombreuses fausses détections sur des périodes de parole. Ces fausses détections trop nombreuses sont à l'origine de filtrages de certaines composantes utiles du signal de parole, ce qui impacte la qualité vocale.

L'art antérieur connait également, par la demande de brevet européenne N° EP1471767 A2, un procédé de détection de la présence de choc dans une trame audio à partir d'une pluralité de trames. Une recherche de motif caractéristique d'un choc est réalisée parmi l'ensemble de trames. Le résultat de cette analyse est ensuite fourni à un module de décision déterminant si la trame testée doit être traitée par un module de suppression de choc afin d'en supprimer le choc acoustique détecté. Le mode de réalisation principal propose l'utilisation d'un banc de filtre de type WOLA pour réaliser la recherche de motif. Cette solution reste également peu robuste et peut entraîner de fausses détections de choc.

La présente invention vient améliorer la situation.

A cet effet, la présente invention concerne un procédé de détection de chocs acoustiques dans un flux audio, caractérisé en ce qu'il comporte les étapes suivantes :

- décomposition dudit flux audio en trames audio ;
- analyse des dites trames audio pour attribuer à chaque trame audio une valeur de catégories parmi une pluralité de valeurs prédéfinies ;
- détermination de la probabilité d'avoir un choc acoustique dans une trame courante à partir d'une séquence de longueur donnée de valeurs de catégories attribuées à un ensemble de trames, en utilisant un modèle de Markov à deux états, défini par une matrice de transition et une matrice d'émission prédéterminées.

Ainsi, le procédé selon l'invention permet une détection de choc acoustique performante, c'est à dire une meilleure séparation entre les périodes de chocs et de non chocs, à coût de calcul et délai de réaction identique voire inférieur.

L'utilisation de modèles de Markov permet de réaliser une discrimination via une détection statistique se basant sur les éléments des trames précédentes.

La présente invention permet de coupler l'utilisation d'indicateurs physiques pour détecter la présence de choc de manière indépendante du niveau sonore, et un modèle de Markov qui permet de rendre plus robuste la détection et la caractérisation de ces chocs.

Les paramètres du modèle de Markov sont classiquement calculés par un apprentissage sur une base de données de chocs acoustiques. L'intérêt est que l'application du modèle pour la détection/caractérisation est ensuite peu coûteuse et est aisément réalisable en temps réel dans des équipements de téléphonie (passerelles, téléphones, plateformes dédiées) ou audio (DSP).

En termes de résultats, le procédé selon la présente invention permet de détecter des chocs mixés dans un signal de parole, jusqu'à des énergies de 10 dB inférieures à celle de la parole (pour exemple : les techniques basées sur des approches temporelles nécessitent au contraire des niveaux très largement supérieurs de l'ordre de 10dB au-dessus). De plus, le procédé selon la présente invention permet de suivre des chocs qui varient rapidement en énergie et/ou en fréquence au cours du temps.

Selon un mode de réalisation, l'analyse d'une trame audio comporte la détermination d'au moins un indicateur physique de la trame et la discrétisation d'au moins un indicateur en valeurs de catégories par comparaison à au moins un ensemble de seuils prédéterminé.

Selon un mode de mise en oeuvre particulier, un indicateur physique est un paramètre fréquentiel définissant un critère énergétique par bande de fréquences.

Cela permet de discriminer les fréquences de chocs par rapport au reste du spectre.

Selon un mode de réalisation, le procédé comporte en outre une étape de détermination des fréquences de choc acoustique en fonction du critère énergétique par bande de fréquences.

Cela permet d'initier le traitement ultérieur des chocs acoustiques.

Selon un mode de mise en oeuvre particulier, le critère énergétique est une fonction de la différence entre le spectre d'énergie normalisé de la trame et une fonction du percentile du spectre d'énergie normalisé

Cela permet de s'affranchir du niveau sonore du flux audio.

Selon un mode de réalisation, un indicateur physique est un paramètre temporel représentatif du taux de passage à zéro de la trame.

Cela permet d'obtenir une meilleure discrimination des périodes de chocs et celles de non choc.

La présente invention se rapporte également à un procédé de filtrage de chocs acoustiques dans un flux audio, caractérisé en ce qu'il comporte les étapes suivantes:

- détection de chocs acoustiques par la mise en oeuvre du procédé de détection de chocs acoustiques dans un flux audio ;
- filtrage par bande de fréquences en fonction des fréquences déterminées lors de l'étape de détection.

La présente invention se rapporte également à un dispositif de détection de chocs acoustiques dans un flux audio, caractérisé en ce qu'il comporte :

- un module de décomposition dudit flux audio en trames audio ;
- un module d'analyse des dites trames audio pour attribuer une valeur de catégories à chaque trame audio, parmi une pluralité de valeurs de catégories prédéfinies;
- un module de détermination de la probabilité d'avoir un choc acoustique dans une trame courante à partir d'une séquence de longueur donnée de valeurs de catégories attribuées à un ensemble de trames en utilisant un modèle de Markov à deux états, défini par une matrice de transition et une matrice d'émission prédéterminées.

La présente invention se rapporte également à une passerelle d'un réseau de communication comportant le dispositif de détection de chocs acoustiques dans un flux audio.

La présente invention se rapporte également à un terminal de communication comportant le dispositif de détection de chocs acoustiques dans un flux audio.

Enfin, la présente invention se rapporte à un programme informatique comportant des instructions de code pour la mise en oeuvre des étapes du procédé de détection de chocs acoustiques dans un flux audio, lorsque ces instructions sont exécutées par un processeur.

Les caractéristiques optionnelles présentées ci-dessus dans le cadre du procédé peuvent éventuellement s'appliquer au dispositif, à la passerelle, au terminal et au programme que nous venons d'évoquer.

On comprendra mieux l'invention à l'aide de la description, faite ci-après à titre purement explicatif, d'un mode de réalisation de l'invention, en référence aux figures annexées :

- la Figure 1 illustre le système selon la présente invention dans un mode de réalisation ;
- la Figure 2 représente le procédé selon la présente invention ; et
- la Figure 3 illustre un mode de réalisation du procédé selon la présente invention.

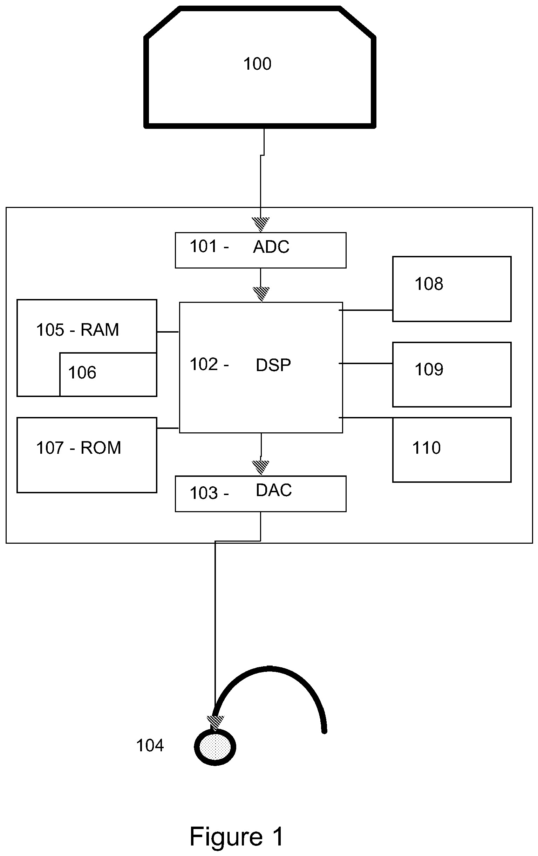

Sur la Figure 1 est représenté le système avec le dispositif de détection selon la présente invention dans un mode de réalisation.

Dans ce mode de réalisation représenté Figure 1, le procédé selon la présente invention est implémenté sur un processeur dédié au traitement du signal (dans cet exemple de type DSP pour « *Digital Signal Processor* »).

Dans ce mode de réalisation, le processeur est dans un boîtier individuel. Le système peut être placé en coupure entre la sortie audio (prise casque) d'un terminal téléphonique (noté 100 sur la Figure 1) et l'entrée audio d'un casque audio (noté 104 sur la Figure 1).

Un convertisseur (noté 101 sur la Figure 1) permet de convertir le signal audio analogique en numérique à une fréquence d'échantillonnage donnée (par exemple 8000 Hz). L'algorithme implémenté dans le DSP (noté 102 sur la Figure 1) et utilisant les informations stockées dans la mémoire de type ROM (notée 107 sur la Figure 1) traite les données du signal en sortie de l'ADC. Le DSP (noté 102 sur la Figure 1) est également connecté à une mémoire vive de type RAM (notée 105 sur la Figure 1) dans laquelle est exécuté un programme d'ordinateur (noté 106 sur la Figure 1). Le procédé de détection de chocs acoustiques selon la présente invention est exécuté par le DSP en relation avec un module de découpe de trames (noté 108 sur la Figure 1), un module d'analyse (noté 109 sur la Figure 1) et un module de détermination de probabilités (noté 110 sur la Figure 1).

Un convertisseur numérique analogique (noté 103 sur la Figure 1) permet de reconvertir le signal numérique vers analogique. Le signal arrivant ainsi au casque (noté 104 sur la Figure 1) est traité et ne comporte plus de chocs acoustiques.

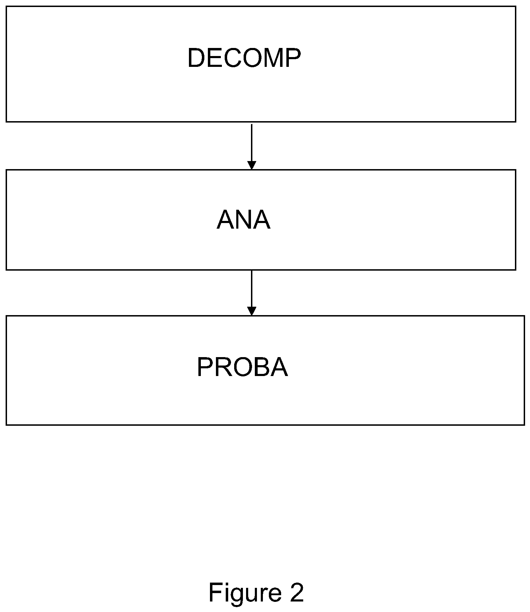

La Figure 2 illustre le procédé de détection de chocs acoustiques selon la présente invention. Le procédé comporte les étapes suivantes :

- décomposition dudit flux audio FA en trames audio T1, T2, ... TP (étape notée DECOMP sur la Figure 2) ;
- analyse des dites trames audio T1, T2, ... TP pour attribuer à chaque trame audio une valeur de catégories parmi une pluralité de valeurs prédéfinies (étape notée ANA sur la Figure 2) ;
- détermination de la probabilité d'avoir un choc acoustique dans une trame courante à partir d'une séquence de longueur donnée de valeurs de catégories attribuées à un ensemble de trames en utilisant un modèle de Markov à deux états , défini par une matrice de transition MTR et une matrice d'émission MRE prédéterminées, (étape notée PROBA sur la Figure 2).

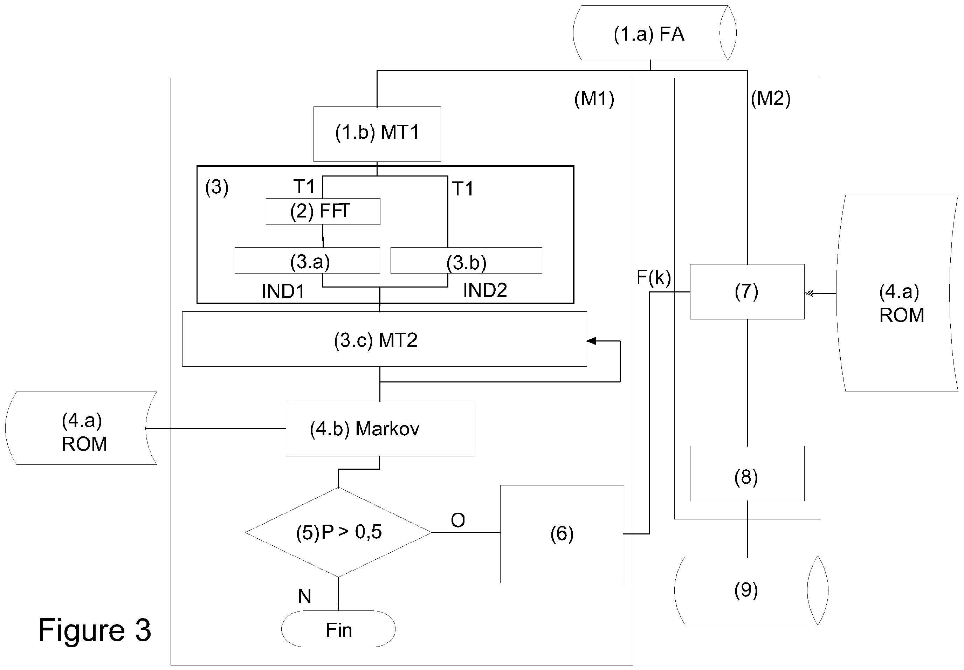

La Figure 3 illustre un mode de réalisation du procédé selon la présente invention.

Dans cet exemple, on a un module de détection M1 et un module de traitement M2. Dans cet exemple, le module de détection M1 renseigne en temps réel les paramètres F(N) utilisés par le module de traitement M2 pour filtrer les chocs (c'est-à-dire supprimer les parties du signal identifiées comme des chocs). Ce mode de fonctionnement permet de réduire au maximum le délai de traversée du protecteur (c'est-à-dire l'élément constitué par l'ensemble qui protège le casque audio) et d'éviter les problèmes de qualité audio liés à l'introduction d'un délai dans l'effet local (reprise du flux capté par le micro local dans le casque).

Dans le module d'analyse M1 fourni en exemple Figure 3 :
Le flux audio FA est mis dans une mémoire tampon MT1 (représentée en 1.b Figure 3) en trames de *Nech* échantillons (par exemple 512) avec un recouvrement de *Rec* échantillons (par exemple 128) en utilisant une fenêtre temporelle adaptée (par exemple de type Hanning).

Selon un mode de mise en oeuvre, l'analyse d'une trame audio comporte la détermination d'au moins un indicateur physique de la trame (Cf 3 Figure 3) et la discrétisation d'au moins un indicateur en valeurs de catégories par comparaison à au moins un ensemble de seuils prédéterminés.

On utilise au moins un indicateur physique, qui est par exemple un paramètre fréquentiel définissant un critère énergétique par bande de fréquences ou un paramètre temporel qui est le nombre de passages par zéro.

La présente invention ne se borne pas à l'utilisation exclusive de ces deux indicateurs. Par exemple, Dans un mode de réalisation alternatif, on peut utiliser, seul ou en combinaison :

- Les coefficients de prédiction linéaire des trames temporelles
- La mesure de « spectral flatness » définie comme le ratio entre la moyenne géométrique et la moyenne arithmétique du spectre de puissance.
- L'énergie par bande de fréquences

On prévoit dans un mode particulier de réalisation de calculer deux indicateurs physiques IND1 et IND2 (cf. 3.a et 3.b Figure 3).

Pour l'indicateur IND1, une transformée de Fourier discrète du signal (représentée en 2 Figure 3) est réalisée. Cette dernière peut être mise en oeuvre par FFT *(« Fast Fourier Transform »* en terminologie anglo-saxonne).

Soit S la trame de *N* échantillons (*N*=512). Soit, $\tilde{S}$ la transformée de Fourrier de S. On définit l'énergie normalisée *Snorm* à l'échantillon *n* comme :

$$Snorm(n) = \frac{\left|\widetilde{S}(n)\right|^2}{\sum\limits_{i=n\min}^{i=n\max}\left|\widetilde{S}(i)\right|^2} \text{ où } nmin = 57 \text{ et } nmax = 256 \text{ (par exemple)}$$

On définit *Perc* comme le 95e centile de *Snorm* entre les échantillons *nmin* et *nmax.* Dans cet exemple, l'indicateur IND1 est définit comme le maximum de la différence entre *Snorm* et 3 x *Perc* entre les échantillons *nmin* et *nmax.*

$$\begin{cases} ind1 = Max(Snorm - 3 \times Perc) \\ n \in [n\min; n\max] \end{cases}$$

Cet indicateur IND1 permet de mesurer les pics de fréquence du spectre, et notamment pour les bandes étroites de fréquence dont l'énergie est trop importante par rapport à l'ensemble du spectre pour être considérées comme partie d'un spectre de parole.

L'indicateur IND2 est par exemple un indicateur temporel qui représente dans ce mode de réalisation le nombre de passages par zéro pour la trame S rapporté au nombre d'échantillons de la trame.

L'étape 3.c permet de discrétiser le ou les indicateurs en catégorie par comparaison à au moins un ensemble de seuil.

Dans le cas d'un seul indicateur IND1, et un ensemble de seuil *seuil1* de taille n1, n1+1 valeurs de catégories sont obtenues.

Dans un exemple de réalisation, pour un ensemble de seuil: Seuil1=[-0.0534 0.0003 0.0797 0.1282], les valeurs de catégories cat1 sont obtenues par:

$$\text{Si} \begin{cases} ind1 \leq seuil1(1) \xrightarrow{alors} cat1 = 1 \\ seuil1(i) < ind1 \leq seuil1(i+1) \xrightarrow{alors} cat1 = i+1 \\ ind1 > seuil1(n1) \xrightarrow{alors} cat1 = n1+1 \end{cases}$$

Dans le cas de deux indicateurs IND1 et IND2, on utilise deux ensembles de seuils *seuil1* de taille *n1* et *seuil2* de taille *n2* pour catégoriser l'ensemble des deux indicateurs IND1 et *IND2.*

On obtient ainsi n1+1 x n2+1 valeurs de catégories.

Pour calculer une probabilité avec une chaîne de Markov, il est préférable de garder en mémoire une séquence de longueur donnée V de valeurs de catégories, par exemple 200.

Dans ce mode particulier de réalisation, cette séquence correspond a la valeur de catégorie de la trame courante et des 199 valeurs de catégories des trames précédant la trame courante.

La présente invention ne se borne pas à l'utilisation exclusive d'une séquence composée des valeurs de catégories des trames précédant la trame courante. En effet, elle peut aussi être composée d'un sous ensemble des valeurs des catégories des trames précédentes et/ou des trames suivantes.

La séquence de valeurs de catégories dans cet exemple est stockée dans une mémoire tampon MT2, qui peut par exemple être une mémoire tampon circulaire de 200 valeurs. A l'initialisation du processus, si le nombre de trame écoulée est inférieur à 200, la mémoire tampon MT2 a une taille égale au nombre de trames écoulées.

A partir de la séquence de V valeurs de catégories, il est ainsi possible d'estimer la probabilité d'être dans un état (choc ou non choc) donné pour la trame en cours en utilisant une chaîne de Markov à deux états appropriée, à l'étape 4.b sur la Figure 3.

La chaîne de Markov est définie par une matrice de transition qui contient les probabilités p et q de transition entre les états choc et non choc ainsi que les probabilités de rester dans un état donné. Les valeurs de probabilités ont été calculées au préalable par apprentissage sur une base d'échantillons sonores pour lesquels les états de chocs ou de non chocs pour chaque trame étaient connus. Ces valeurs ont été stockées dans la ROM (4.a sur la Figure 3).

La théorie des chaînes de Markov est par exemple définie dans l'article A. A. Markov « *Extension of the limit theorems of probability theory to a sum of variables connected in a chain* » (reprinted in Appendix B of: R. Howard. Dynamic Probabilistic Systems, volume 1: Markov Chains. John Wiley and Sons, 1971).

Pour chacun des deux états, la phase d'apprentissage permet aussi de connaître la probabilité d'émission, c'est-à-dire, la probabilité qu'une trame audio analysée soit classifiée dans une catégorie. Ces probabilités sont regroupées dans une matrice d'émission à deux colonnes, une par catégorie et à n1+1 x n2+1 lignes. Les valeurs de la matrice d'émission ont été stockées dans la ROM (4.a sur la Figure 3).

Le module de décision mettant en oeuvre une étape de décision (noté 5 sur la Figure 3), se base sur la probabilité issue de la chaîne de Markov que la trame courante soit un choc P. Une trame est considérée comme un choc si la probabilité P est strictement supérieure à 0.5.

Si la trame courante est un choc, les K fréquences des chocs, données par F(k) $k$=1...$K$, sont toutes les valeurs de fréquence $n$ pour lesquelles $Snorm(n)$-3x $Perc$ >0 où $n \in$ [$n$ min; $n$ max]. Elles sont déterminées à l'étape notée (6) sur la Figure 3.

Un procédé de filtrage du choc acoustique est alors mis en oeuvre dans le module de traitement.

Le flux audio numérique FA (représenté en 1.a Figure 3) avec une fréquence d'échantillonnage donnée (par exemple 8000 Hz) est soumis à un module de filtrage permettant d'atténuer, voire de supprimer les chocs à l'étape 7. Dans un mode de réalisation particulier, ce module est composé de $K$ filtres IIR (« *Infinite Impulse Response* » en terminologie anglo-saxonne), où chaque filtre est un coupe-bande de fréquences centrale F($k$) et de largeur de bande L($k$). Les valeurs des coefficients des filtres peuvent être soit prédéterminées (dans ce mode de réalisation représenté sur la figure 3, tous les coefficients de tous les filtres correspondant aux fréquences à filtrer sont stockés dans la ROM (4.a sur la Figure 3)), soit calculées au fil de l'eau (cela permet de réduire la taille de la mémoire au détriment de la complexité).

De façon optionnelle, le flux filtré arrive ensuite dans un module de compression de la dynamique (ou en terminologie anglo-saxonne « *Dynamic Range Compression »)* mettant en oeuvre une étape 8 de suppression des résidus du filtrage et des chocs large bande et très énergétiques non détectés par le module M1.

Le flux audio en sortie (9) est ainsi traité contre les chocs acoustiques.

L'utilisation de modèles de Markov permet de réaliser une discrimination via une détection statistique se basant sur les éléments des trames précédentes.

Le modèle de Markov proposé ci-dessus a été entraîné sur des indicateurs physiques indépendants du niveau sonore. Ainsi, la protection est efficace quels que soit les niveaux d'entrées.

Un des autres avantages des modèles de Markov est que ces derniers sont entraînés via des bases et des critères prédéfinis. Il est ainsi possible de produire un détecteur adapté à un besoin donné (par exemple : aucune fausse détection, 100 % des chocs détectés dès la deuxième trame de chocs, etc ..).

Par exemple, si les modèles de Markov sont entraînés à la fois pour maximiser le taux de détection, minimiser le taux de fausse détection et avoir un temps de réactivité réduit, la présente invention permet de détecter en moyenne 98 % des chocs pour seulement 3% de fausses détections. Parmi les 3% de fausses détections, 90% ont une durée inférieure à 100 ms et 100% ont une durée inférieure à 200 ms. Le temps de réactivité de l'algorithme est aussi élevé puisque 95% des chocs sont détectés en moins de 24 ms.

Une des applications les plus directes de la présente invention est la protection des utilisateurs de services de télécommunication. En effet, la présente invention permet de détecter les chocs et peut être couplée à un module de traitement qui va par exemple filtrer les chocs ou couper le flux audio.

Ce traitement peut être implémenté dans un boîtier individuel de protection qui serait en coupure entre le téléphone de l'utilisateur et le casque audio (ou le combiné). Ce type d'équipement existe déjà, mais la performance des équipements existants est perfectible, soit en termes d'efficacité de détection et de protection, soit en termes de qualité vocale liée à la présence de fausses alarmes. Le traitement peut également être implanté dans des téléphones. Enfin, ce traitement peut aussi être employé dans des passerelles, des ordinateurs, des décodeurs de télévision numérique ou d'autres terminaux.

## Revendications

1. Procédé de détection de chocs acoustiques dans un flux audio (FA), les chocs acoustiques étant des sons de type sifflements composés d'une à plusieurs composantes fréquentielles qui peuvent apparaitre lors de la reproduction d'un flux audio multimédia, le procédé étant **caractérisé en ce qu'**il comporte les étapes suivantes :

   - décomposition (DECOMP) dudit flux audio (FA) en trames audio (Ti, T2, ... TP) ;
   - analyse (ANA) des dites trames audio (Ti, T2, ... TP) pour attribuer à chaque trame audio une valeur de catégories parmi une pluralité de valeurs prédéfinies, à partir de la détermination d'au moins un indicateur (IND1) physique de la trame ;
   - détermination de la probabilité (PROBA) d'avoir un choc acoustique, à partir d'une séquence de longueur donnée de valeurs de catégories attribuées, en utilisant un modèle de Markov à deux états (4b), défini par une matrice de transition (MTR) et une matrice d'émission (MRE) prédéterminées, la matrice de transition (MTR) comprenant des probabilités p et q de transition entre les états choc et non choc ainsi que des probabilités de rester dans un état donné, les valeurs de probabilités ayant été calculées au préalable par apprentissage sur une base d'échantillons sonores pour lesquels les états de chocs ou de non chocs pour chaque trame étaient connus, ledit modèle de Markov ayant été entrainé sur au moins un indicateur physique indépendant du niveau sonore.

**2.** Procédé selon la revendication 1, **caractérisé en ce que** l'analyse (ANA) d'une trame audio comporte la discrétisation (3c) d'au moins un indicateur en valeurs de catégories par comparaison à au moins un ensemble de seuils prédéterminé.

**3.** Procédé selon la revendication 2, **caractérisé en ce qu'**un indicateur physique est un paramètre fréquentiel définissant un critère énergétique par bande de fréquences.

**4.** Procédé selon la revendication 3, **caractérisé en ce qu'**il comporte en outre une étape de détermination (6) des fréquences de choc acoustique en fonction du critère énergétique par bande de fréquences.

**5.** Procédé selon la revendication 3 ou 4, **caractérisé en ce que** le critère énergétique est une fonction de la différence entre le spectre d'énergie normalisé de la trame et une fonction du percentile du spectre d'énergie normalisé.

**6.** Procédé selon la revendication 3, **caractérisé en ce qu'**un deuxième indicateur, représentatif du taux de passage à zéro de la trame, est déterminé et **en ce que** la discrétisation s'effectue par comparaison à deux ensembles de seuils prédéterminés.

**7.** Procédé de filtrage de chocs acoustiques dans un flux audio, **caractérisé en ce qu'**il comporte les étapes suivantes :

- détection de chocs acoustiques par la mise en oeuvre d'un procédé conforme à la revendication 4 ;
- filtrage (7) par bande de fréquences en fonction des fréquences déterminées lors de l'étape de détection.

**8.** Dispositif de détection de chocs acoustiques dans un flux audio (FA),), les chocs acoustiques étant des sons de type sifflements composés d'une à plusieurs composantes fréquentielles qui peuvent apparaitre lors de la reproduction d'un flux audio multimédia, **caractérisé en ce qu'**il comporte :

- un module de décomposition (108) dudit flux audio (FA) en trames audio (Ti, T2, ... TP) ;
- un module d'analyse (109) des dites trames audio (Ti, T2, ... TP) pour attribuer une valeur de catégories à chaque trame audio, parmi une pluralité de valeurs de catégories prédéfinies, l'analyse (ANA) comprenant la détermination d'au moins un indicateur (IND1) physique de la trame ;
- un module de détermination de la probabilité (110) d'avoir un choc acoustique à partir d'une séquence de longueur donnée de valeurs de catégories attribuées, en utilisant un modèle de Markov à deux états, défini par une matrice de transition (MTR) et une matrice d'émission (MRE) prédéterminées, la matrice de transition (MTR) comprenant des probabilités p et q de transition entre les états choc et non choc ainsi que des probabilités de rester dans un état donné, les valeurs de probabilités ayant été calculées au préalable par apprentissage sur une base d'échantillons sonores pour lesquels les états de chocs ou de non chocs pour chaque trame étaient connus, ledit modèle de Markov ayant été entrainé sur au moins un indicateur physique indépendant du niveau sonore.

**9.** Passerelle d'un réseau de communication **caractérisé en ce qu'**il comporte un dispositif conforme à la revendication 8.

**10.** Terminal de communication, **caractérisé en ce qu'**il comporte un dispositif conforme à la revendication 8.

**11.** Programme informatique comportant des instructions de code pour la mise en oeuvre des étapes du procédé de détection selon l'une des revendications 1 à 7, lorsque ces instructions sont exécutées par un processeur.

**Patentansprüche**

**1.** Verfahren zur Erkennung von akustischen Schocks in einem Audiostrom (FA), wobei die akustischen Schocks Töne vom Typ von Pfeifgeräuschen sind, die aus einer bis mehreren Frequenzkomponenten bestehen, welche bei der Wiedergabe eines Multimedia-Audiostroms auftreten können, wobei das Verfahren **dadurch gekennzeichnet ist,**

**dass** es die folgenden Schritte umfasst:

- Zerlegung (DECOMP) des Audiostroms (FA) in Audiorahmen (Ti, T2, ..., TP);
- Analyse (ANA) dieser Audiorahmen (Ti, T2, ..., TP), um jedem Audiorahmen einen Kategorienwert von mehreren vordefinierten Werten zuzuordnen, ausgehend von der Bestimmung wenigstens eines physikalischen Indikators (IND1) des Rahmens;
- Bestimmung der Wahrscheinlichkeit (PROBA), dass ein akustischer Schock vorliegt, aus einer Folge von gegebener Länge von zugeordneten Kategorienwerten unter Verwendung eines Markov-Modells mit zwei Zuständen (4b), das durch eine vorbestimmte Übergangsmatrix (MTR) und eine vorbestimmte Sendematrix (MRE) definiert ist, wobei die Übergangsmatrix (MTR) Übergangswahrscheinlichkeiten p und q zwischen den Schock- und Nicht-Schock-Zuständen sowie Wahrscheinlichkeiten, in einem gegebenen Zustand zu verbleiben, umfasst, wobei die Werte der Wahrscheinlichkeiten im Voraus durch Lernen anhand einer Basis von Klangproben berechnet worden sind, für welche die Schock- oder Nicht-Schock-Zustände für jeden Rahmen bekannt waren, wobei das Markov-Modell an wenigstens einem von dem Schallpegel unabhängigen physikalischen Indikator trainiert worden ist.

2. Verfahren nach Anspruch 1, **dadurch gekennzeichnet, dass** die Analyse (ANA) eines Audiorahmens die Diskretisierung (3c) wenigstens eines Indikators in Kategorienwerte durch Vergleich mit wenigstens einer vorbestimmten Menge von Schwellenwerten umfasst.

3. Verfahren nach Anspruch 2, **dadurch gekennzeichnet, dass** ein physikalischer Indikator ein Frequenzparameter ist, der ein energiebezogenes Kriterium nach Frequenzband definiert.

4. Verfahren nach Anspruch 3, **dadurch gekennzeichnet, dass** es außerdem einen Schritt der Bestimmung (6) der Frequenzen des akustischen Schocks in Abhängigkeit von dem energiebezogenen Kriterium nach Frequenzband umfasst.

5. Verfahren nach Anspruch 3 oder 4, **dadurch gekennzeichnet, dass** das energiebezogenen Kriterium eine Funktion der Differenz zwischen dem normierten Energiespektrum des Rahmens und einer Funktion des Perzentils des normierten Energiespektrums ist.

6. Verfahren nach Anspruch 3, **dadurch gekennzeichnet, dass** ein zweiter Indikator, der für die Nulldurchgangsrate des Rahmens repräsentativ ist, bestimmt wird, und dadurch, dass die Diskretisierung durch Vergleich mit zwei vorbestimmten Mengen von Schwellenwerten durchgeführt wird.

7. Verfahren zur Filterung von akustischen Schocks in einem Audiostrom, **dadurch gekennzeichnet, dass** es die folgenden Schritte umfasst:

- Erkennung von akustischen Schocks durch die Durchführung eines Verfahrens gemäß Anspruch 4;
- frequenzbandweise Filterung (7) in Abhängigkeit von den im Schritt der Erkennung bestimmten Frequenzen.

8. Vorrichtung zur Erkennung von akustischen Schocks in einem Audiostrom (FA), wobei die akustischen Schocks Töne vom Typ von Pfeifgeräuschen sind, die aus einer bis mehreren Frequenzkomponenten bestehen, welche bei der Wiedergabe eines Multimedia-Audiostroms auftreten können, **dadurch gekennzeichnet, dass** sie umfasst:

- ein Modul zur Zerlegung (108) des Audiostroms (FA) in Audiorahmen (Ti, T2, ..., TP);
- ein Modul zur Analyse (109) dieser Audiorahmen (Ti, T2, ..., TP), um jedem Audiorahmen einen Kategorienwert von mehreren vordefinierten Kategorienwerten zuzuordnen, wobei die Analyse (ANA) die Bestimmung wenigstens eines physikalischen Indikators (IND1) des Rahmens umfasst;
- ein Modul zur Bestimmung der Wahrscheinlichkeit (110), dass ein akustischer Schock vorliegt, aus einer Folge von gegebener Länge von zugeordneten Kategorienwerten unter Verwendung eines Markov-Modells mit zwei Zuständen, das durch eine vorbestimmte Übergangsmatrix (MTR) und eine vorbestimmte Sendematrix (MRE) definiert ist, wobei die Übergangsmatrix (MTR) Übergangswahrscheinlichkeiten p und q zwischen den Schock- und Nicht-Schock-Zuständen sowie Wahrscheinlichkeiten, in einem gegebenen Zustand zu verbleiben, umfasst, wobei die Werte der Wahrscheinlichkeiten im Voraus durch Lernen anhand einer Basis von Klangproben berechnet worden sind, für welche die Schock- oder Nicht-Schock-Zustände für jeden Rahmen bekannt waren, wobei das Markov-Modell an wenigstens einem von dem Schallpegel unabhängigen physikalischen Indikator trainiert worden ist.

**9.** Gateway eines Kommunikationsnetzes, **dadurch gekennzeichnet, dass** es eine Vorrichtung gemäß Anspruch 8 aufweist.

**10.** Kommunikationsendgerät, **dadurch gekennzeichnet, dass** es eine Vorrichtung gemäß Anspruch 8 aufweist.

**11.** Computerprogramm, welches Codeanweisungen zur Durchführung der Schritte des Verfahrens zur Erkennung nach einem der Ansprüche 1 bis 7, wenn diese Anweisungen von einem Prozessor ausgeführt werden, umfasst.

**Claims**

**1.** Method for detecting acoustic shocks in an audio stream (FA), the acoustic shocks being hissing sounds formed of a plurality of frequency components that may occur when reproducing a multimedia audio stream, the method being **characterized in that** it includes the following steps:

- breaking down (DECOMP) said audio stream (FA) into audio frames (Ti, T2, ... TP);
- analysing (ANA) said audio frames (Ti, T2, ... TP) so as to assign each audio frame a category value from among a plurality of predefined values, on the basis of the determination of at least one physical indicator (IND1) of the frame;
- determining the probability (PROBA) of having an acoustic shock, on the basis of a sequence of given length of assigned category values, using a dual-state Markov model (4b) defined by a transition matrix (MTR) and an emission matrix (MRE) that are predetermined, the transition matrix (MTR) comprising probabilities p and q of transition between the shock and non-shock states and probabilities of remaining in a given state, the probability values having been calculated beforehand by learning from a base of sound samples for which the shock or non-shock states for each frame were known, said Markov model having been trained on at least one physical indicator independent of the sound level.

**2.** Method according to Claim 1, **characterized in that** the analysis (ANA) of an audio frame includes discretizing (3c) at least one indicator into category values by comparison with at least one predetermined set of thresholds.

**3.** Method according to Claim 2, **characterized in that** a physical indicator is a frequency parameter defining one energy criterion per frequency band.

**4.** Method according to Claim 3, **characterized in that** it furthermore includes a step (6) of determining the acoustic shock frequencies on the basis of the energy criterion per frequency band.

**5.** Method according to Claim 3 or 4, **characterized in that** the energy criterion is a function of the difference between the normalized energy spectrum of the frame and a function of the percentile of the normalized energy spectrum.

**6.** Method according to Claim 3, **characterized in that** a second indicator, representative of the zero-crossing rate of the frame, is determined, and **in that** the discretization is performed by comparison with two predetermined sets of thresholds.

**7.** Method for filtering acoustic shocks in an audio stream, **characterized in that** it includes the following steps:

- detecting acoustic shocks by implementing a method according to Claim 4;
- frequency band filtering (7) on the basis of the frequencies determined in the detection step.

**8.** Device for detecting acoustic shocks in an audio stream (FA), the acoustic shocks being hissing sounds formed of a plurality of frequency components that may occur when reproducing a multimedia audio stream, **characterized in that** it includes:

- a module (108) for breaking down said audio stream (FA) into audio frames (Ti, T2, ... TP);
- a module (109) for analysing said audio frames (Ti, T2, ... TP) so as to assign each audio frame a category value from among a plurality of predefined category values, the analysis (ANA) comprising the determination of at least one physical indicator (IND1) of the frame;
- a module (110) for determining the probability of having an acoustic shock, on the basis of a sequence of given length of assigned category values, using a dual-state Markov model defined by a transition matrix (MTR) and an emission matrix (MRE) that are predetermined, the transition matrix (MTR) comprising probabilities p and q of transition between the shock and non-shock states and probabilities of remaining in a given state, the probability values having been calculated beforehand by learning from a base of sound samples for which shock or non-shock states for each frame were known, said Markov model having been trained on at least one physical indicator independent of the sound level.

9. Gateway for a communication network, **characterized in that** it includes a device according to Claim 8.

10. Communication terminal, **characterized in that** it includes a device according to Claim 8.

11. Computer program including code instructions for implementing the steps of the detection method according to one of Claims 1 to 7 when these instructions are executed by a processor.

**Figure 1**

```
┌─────────────────────────────────┐
│                                 │
│            DECOMP               │
│                                 │
└─────────────────────────────────┘
                 │
                 ▼
┌─────────────────────────────────┐
│                                 │
│             ANA                 │
│                                 │
└─────────────────────────────────┘
                 │
                 ▼
┌─────────────────────────────────┐
│                                 │
│            PROBA                │
│                                 │
└─────────────────────────────────┘
```

Figure 2

Figure 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20050105717 A

- EP 1471767 A2

**Littérature non-brevet citée dans la description**

- Markov Chains. **R. HOWARD.** Dynamic Probabilistic Systems. John Wiley and Sons, 1971, vol. 1